# EUROPÄISCHE PATENTSCHRIFT

(11) **EP 2 557 281 B1**
(45) Veröffentlichungstag und Bekanntmachung des Hinweises auf die Patenterteilung: **13.11.2013**
(21) Anmeldenummer: 12178928.3
(22) Anmeldetag: 02.08.2012
(51) Int. Cl.: F01M 13/02

(54) **Brennkraftmaschine**
Combustion engine
Moteur à combustion

(30) Priorität: 10.08.2011 DE 102011080783
(43) Veröffentlichungstag der Anmeldung: 13.02.2013
(73) Patentinhaber: MAHLE International GmbH, 70376 Stuttgart (DE)
(72) Erfinder: Goerlich, Leszek, 71229 Leonberg (DE); Özkaya, Yakup, 70806 Kornwestheim (DE); Ruppel, Stefan, 69126 Heidelberg-Emmertsgrund (DE)
(74) Vertreter: BRP Renaud & Partner

(56) Entgegenhaltungen:
- DE-A1-102009 008 831
- US-A1- 2009 308 364

## Beschreibung

Die vorliegende Erfindung betrifft eine Brennkraftmaschine insbesondere eines Kraftfahrzeuges. Die vorliegende Erfindung betrifft weiter eine Adaptereinrichtung für eine derartige Brennkraftmaschine.

Die für den Brennvorgang notwendige Luft wird einer Brennkraftmaschine üblicherweise über eine Luftzuführung zugeführt. Die Einleitung dieser Luft in einem von einem Zylinder begrenzten Brennraum erfolgt dabei in der Regel über ein Einlassventil. Zum Antreiben eines Kolbens wird dabei ein Luftkraftstoffgemisch im jeweiligen Brennraum gezündet. Dadurch entsteht Abgas, das aufgrund der hohen Drücke zu einem gewissen Anteil am Kolben vorbei in ein Kurbelgehäuse eintreten kann. Das Kurbelgehäuse umschließt dabei zumindest eine Kurbelwelle, die mit dem jeweiligen Kolben verbunden ist. Um einen durch diese "Blow-by-Gase" erzeugten Überdruck im Kurbelgehäuse zu vermeiden, weist die Brennkraftmaschine üblicherweise eine Entlüftungseinrichtung auf, die das Kurbelgehäuse mit der Luftzuführung fluidisch verbindet. Somit werden die Blow-by-Gase zur Luftzuführung geführt, wobei die Entlüftungseinrichtung einen Ölnebelabscheider aufweisen kann, der die Blow-by-Gase von ihrem Ölbestandteil trennt und das somit gewonnene Öl durch eine fluidische Verbindung zurück zu einem Ölreservoir des Kugelgehäuses führt. Damit wird sichergestellt, dass lediglich der Gasanteil des Blow-by-Gases in die Luftzuführung gelangt. Die Luftzuführung weist in der Regel eine Drosseleinrichtung sowie eine Ladeeinrichtung auf, wobei die Ladeeinrichtung der Leistungssteigerung der Brennkraftmaschine, insbesondere bei einer Volllast der Brennkraftmaschine, dient. Zweckmäßig kann auch die Entlüftungseinrichtung in eine Volllastzuführung und eine Teillastzuführung unterteilt, wobei die Volllastzuführung stromauf der Ladeeinrichtung in die Luftzuführung einmündet und die Teillastzuführung stromab der Drosseleinrichtung in die Luftzuführung einmündet. Da die über die Entlüftungseinrichtung zur Luftzuführung zurückgeführten Gase umweltschädlich sind, ist es wichtig, ein Entweichen dieser Gase in die Umgebung zu vermeiden. Darüber hinaus führt ein derartiges Leck zu einem Ansaugen von Umgebungsluft durch die Luftzuführung und somit zu einer Störung des Betriebs der Brennkraftmaschine.

Zur Vermeidung und Erkennung eines derartigen Lecks ist beispielsweise aus der DE 103 20 054 A1 eine Brennkraftmaschine bekannt, die Luftsensoren innerhalb der Entlüftungseinrichtung und der Luftzuführung aufweist.

Aus der DE 10 2009 008 831 A1 ist eine Brennkraftmaschine bekannt, bei der das Kurbelgehäuse mittels einer Entlüftungseinrichtung mit der Luftzuführung fluidisch verbunden ist. Die Entlüftungseinrichtung zweigt hierbei in zwei Teilleitungen ab, die jeweils stromauf einer Ladeeinrichtung bzw. stromab einer Drosseleinrichtung in die Luftzuführung münden.

Der mehrkomponentige Aufbau der Entlüftungseinrichtung, insbesondere die Unterteilung in Teillastzuführung und Volllastzuführung, kann jedoch weiterhin dazu führen, dass ein Leck innerhalb der Entführungseinrichtung nicht vermieden bzw. erkannt werden kann. So kann beispielsweise bei der Montage der Entlüftungseinrichtung ein Teil der Entlüftungseinrichtung nicht richtig montiert sein oder ein Leck innerhalb einer der Zuführungen der Entlüftungseinrichtung wird, insbesondere durch die Sensorik, nicht erkannt.

Die vorliegende Erfindung beschäftigt sich daher mit dem Problem, für eine Brennkraftmaschine der eingangs genannten Art eine verbesserte oder zumindest alternative Ausführungsform anzugeben, die sich insbesondere durch eine verbesserte Vermeidung bzw. Erkennung von Lecks innerhalb einer Entlüftungseinrichtung der Brennkraftmaschine auszeichnet.

Die vorliegende Erfindung beruht auf dem allgemeinen Gedanken, eine dichte und vereinfachte Montage einer Entlüftungseinrichtung einer Brennkraftmaschine sowie eine vereinfachte Erkennung von Lecks innerhalb der Entlüftungseinrichtung durch eine Adaptereinrichtung sicherzustellen, die innerhalb der Entlüftungseinrichtung angeordnet ist und Abschnitte einer Volllastzuführung der Entlüftungseinrichtung und einer Teillastzuführung der Entlüftungseinrichtung derart fluidisch miteinander verbindet, dass eine Trennung innerhalb einer dieser Zuführungen zwangsläufig zu einer Trennung innerhalb der anderen Zuführung führt. Dabei ist die Entlüftungseinrichtung einerseits mit einer Luftzuführung zur Versorgung der Brennkraftmaschinen mit Luft und andererseits mit einem Kurbelgehäuse der Brennkraftmaschine fluidisch verbunden, wobei das Kurbelgehäuse zumindest eine Kurbelwelle der Brennkraftmaschine umschließt. Die Entlüftungseinrichtung dient also insbesondere dem Zweck, Gase, insbesondere Blow-by-Gase, vom Kurbelgehäuse zur Luftzuführung zu leiten. Dabei weist die Luftzuführung eine Drosseleinrichtung zur Regulierung einer über die Luftzuführung der Brennkraftmaschine zugeführten Luftmenge auf. Die Luftzuführung weist weiter eine Ladeeinrichtung, insbesondere einen Verdichter der Ladeeinrichtung auf, die der Leistungssteigerung der Brennkraftmaschine, insbesondere bei einer Volllast der Brennkraftmaschine dient. Die Aufteilung der Entlüftungseinrichtung in die Teillastzuführung und die Volllastzuführung dient also insbesondere dem Zweck, einem Volllastbetrieb bzw. einem Teillastbetrieb der Brennkraftmaschine gerecht zu werden, wobei die Volllastzuführung stromauf der Ladeeinrichtung bezüglich der Strömungsrichtung der Ladeluft in die Luftzuführung einmündet, während die Teillastzuführung stromab der Drosseleinrichtung in die Luftzuführung einmündet. Die Anordnung der Adaptereinrichtung innerhalb der Entlüftungseinrichtung führt weiter zu einer Unterteilung der Volllastzuführung in eine Volllastleitung und einen Volllastpfad sowie die Unterteilung der Teillastzuführung in eine Teillastleitung und einen Teillastpfad. Dabei sind die jeweiligen Leitungen bezüglich der vom Kurbelgehäuse zur Luftzuführung geführten Gase stromab der Adaptereinrichtung angeordnet, während die Pfade stromauf der Adaptereinrichtung angeordnet sind. Die Volllastzuführung weist also insbesondere einen Volllastpfad auf, der stromauf der Adaptereinrichtung angeordnet ist und über die Adaptereinrichtung fluidisch mit einer Volllastleitung verbunden ist, die stromab der Adaptereinrichtung angeordnet ist. Entsprechendes gilt für die Teillastzuführung, d.h. die Teillastzuführung weist insbesondere einen Teillastpfad auf, der stromauf der Adaptereinrichtung angeordnet ist und über die Adaptereinrichtung fluidisch mit einer Teillastleitung verbunden ist, die stromab der Adaptereinrichtung angeordnet ist

Wie zuvor erwähnt, kann eine Trennung bzw. ein Leck innerhalb der Teillastzuführung oder innerhalb der Volllastzuführung dazu führen, dass ein derartiges Leck, insbesondere von einer Steuer-/Regeleinrichtung der Brennkraftmaschine, nicht zuverlässig erkannt werden kann. Die vorliegende Erfindung nutzt also insbesondere die Kenntnis, dass eine zuverlässige und leichte Erkennung und somit Vermeidung solcher Lecks gewährleistet ist, wenn ein Leck innerhalb der Volllastzuführung zu einem Leck innerhalb der Teillastzuführung führt bzw., wenn ein Leck innerhalb der Teillastzuführung zu einem Leck innerhalb der Volllastzuführung führt. Dies ist insbesondere für den Fall eines Lecks innerhalb der Volllastzuführung der Fall, weil hier durch ein zusätzliches Absaugen von Umgebungsluft durch die Ladeeinrichtung die Erkennung eines solchen Lecks besonders schwierig ist.

Dem Erfindungsgedanken entsprechend weist die Entlüftungseinrichtung eine Adaptereinrichtung auf, die vier Anschlüsse aufweist. Weiter ist die Volllastzuführung in einen vom Kurbelgehäuse zur Adaptereinrichtung führenden Volllastpfad und in eine von der Adaptereinrichtung zur Luftzuführung führenden Volllastleitung unterteilt, wobei die Volllastleitung stromauf der Ladeeinrichtung in die Luftzuführung einmündet. Zudem ist die Teillastzuführung der Entlüftungseinrichtung in einen vom Kurbelgehäuse zur Adaptereinrichtung führenden Teillastpfad sowie in eine von der Adaptereinrichtung zur Luftzuführung führende Teillastleitung unterteilt, wobei die Teillastleitung stromab der Drosseleinrichtung in die Luftzuführung einmündet. Die Adaptereinrichtung verbindet dabei gleichzeitig den Volllastpfad mit der Volllastleitung sowie den Teillastpfad mit der Teillastleitung fluidisch miteinander. Die Verbindung zwischen dem Volllastpfad und der Volllastleitung ist dabei über einen ersten Anschluss der Adaptereinrichtung realisiert, der mit einem Volllastleitungsanschluss der Volllastleitung verbunden ist. Hierzu ist der erste Anschluss der Adaptereinrichtung zweckmäßig komplementär zum Volllastleitungsanschluss ausgebildet. Der erste Anschluss der Adaptereinrichtung und der Volllastleitungsanschluss sind also insbesondere derart ausgebildet, dass sie aneinander koppelbar sind. Diese Anschlüsse können also beispielsweise derart ausgebildet sein, dass einer der Anschlüsse innerhalb des anderen Anschlusses angeordnet werden kann. Der erste Anschluss der Adaptereinrichtung ist weiter innerhalb der Adaptereinrichtung fluidisch mit einem zweiten Anschluss der Adaptereinrichtung verbunden, wobei der zweite Anschluss der Adaptereinrichtung komplementär zu einem Volllastpfadanschluss ausgebildet ist. Der zweite Anschluss der Adaptereinrichtung ist weiter, insbesondere durch die komplementäre Ausbildung, mit dem Volllastpfadanschluss fluidisch verbunden. Somit ist eine fluidische Verbindung innerhalb der Volllastzuführung, das heißt eine fluidische Verbindung zwischen der Volllastleitung und dem Volllastpfad gewährleistet. Die Adaptereinrichtung weist weiter einen dritten Anschluss auf, der mit einem Teillastleitungsanschluss der Teillastleitung verbunden ist. Hierzu sind der dritte Anschluss der Adaptereinrichtung und der Teillastleitungsanschluss komplementär zueinander ausgebildet. Eine fluidische Verbindung innerhalb der Teillastzuführung ist nun über einen vierten Anschluss der Adaptereinrichtung gewährleistet, der innerhalb der Adaptereinrichtung mit dem dritten Anschluss der Adaptereinrichtung fluidisch verbunden ist und zudem fluidisch mit einem Teillastpfadanschluss des Teillastpfades verbunden ist. Hierzu sind der vierte Anschluss und der Teillastpfadanschluss insbesondere komplementär zueinander ausgebildet. Die komplementäre Ausbildung der jeweiligen zugehörigen Anschlüsse dient dabei insbesondere dem Zweck, einen der zugehörigen Anschlüsse innerhalb des anderen zugehörigen Anschlüsse anzuordnen.

Eine vereinfachte Montage bzw. eine vereinfachte Herstellung der Adaptereinrichtung ist dabei insbesondere dann gewährleistet, wenn der erste und der dritte Anschluss der Adaptereinrichtung auf einer Seite der Adaptereinrichtung, insbesondere auf einer der Leitungen zugewandten Leitungsseite der Adaptereinrichtung, angeordnet sind. Dementsprechend sind der zweite und der vierte Anschluss der Adaptereinrichtung zweckmäßig auf einer anderen, insbesondere gegenüberliegenden Seite der Adaptereinrichtung angeordnet. Diese gegenüberliegende Seite entspricht bei einer vorteilhaften Ausführungsform einer den Pfaden zugewandten Pfadseite der Adaptereinrichtung.

Die Adaptereinrichtung kann hierbei sowohl mehrteilig als auch einteilig ausgebildet sein. Insbesondere kann die Adaptereinrichtung auch einstückig und/oder monolithisch ausgebildet sein. So sind Ausführungsformen vorstellbar, bei denen die Adaptereinrichtung einstückig und/oder einteilig und/oder monolithisch aus einem Kunststoff, insbesondere als Spritzgussteil, ausgebildet ist.

Gemäß einer weiteren vorteilhaften Ausführungsform weist die Entlüftungseinrichtung einen Ölnebelabscheider auf. Der Ölnebelabscheider dient dabei insbesondere dem Zweck, die vom Kurbelgehäuse zur Luftzuführung zuzuführenden Gase von etwaigen Ölbestandteilen zu befreien. Der Ölnebelabscheider sorgt also dafür, dass lediglich ölfreie Gase durch die Entlüftungseinrichtung in die Luftzuführung gelangen. Bei einer besonders vorteilhaften Ausführungsform weist die Brennkraftmaschine eine Ölleitung auf, die den Ölnebelabscheider fluidisch mit dem Kurbelgehäuse verbindet. Dabei mündet die Ölleitung vorzugsweise in einem Bereich des Kurbelgehäuses, der einem Ölreservoir des Kurbelgehäuses zugeordnet ist. Die Ölleitung dient dabei dem Zweck, das vom Ölnebelabscheider gewonnene Öl dem Kurbelgehäuse zurückzuführen. Der Ölnebelabscheider ist weiter vorzugsweise innerhalb des Pfadabschnittes der Entlüftungseinrichtung angeordnet. Dabei wird insbesondere auf eine Anordnung hingewiesen, bei der der Ölnebelabscheider unmittelbar am Kurbelgehäuse angeordnet ist.

Der Ölnebelabscheider kann weiter sowohl der Volllastzuführung bzw. dem Volllastpfad als auch der Teillastzuführung bzw. dem Teillastpfad zugeordnet sein. Bei einer möglichen Ausführung ist also der Ölnebelabscheider, insbesondere stromaufseitig über eine einzige Zuführung fluidisch mit dem Kurbelgehäuse verbunden. Eine Trennung in die Volllastzuführung und die Teillastzuführung ist in dem Fall also stromabseitig des Ölnebelabscheiders realisiert.

Bei einer besonders bevorzugten Ausführungsform sind der Volllastpfadanschluss sowie der Teillastpfadanschluss unmittelbar am Ölnebelabscheider angeordnet. Der Volllastpfadanschluss und der Teillastpfadanschluss sind also insbesondere stromabseitig unmittelbar am Ölnebelabscheider angeordnet und bilden demnach optional die Aufteilung der Entlüftungseinrichtung in eine Volllastzuführung bzw. in einen Volllastpfad und eine Teillastzuführung bzw. einen Teillastpfad. Der Volllastpfadanschluss und der Teillastpfadanschluss können zudem oder alternativ in den Ölnebelabscheider integriert sein. In diesem Fall sind besagte Anschlüsse beispielsweise als in den Ölnebelabscheider integrierte fluidische Verbindungen ausgebildet.

Bei einer weiteren bevorzugten Ausführungsform der Erfindung weist der Volllastpfad zumindest ein Ventil auf. Das Ventil ist dabei vorzugsweise stromab des Ölnebelabscheiders angeordnet. Optional oder zusätzlich weist der Teillastpfad ebenfalls ein Ventil auf, das insbesondere auch stromab des Ölnebelabscheiders angeordnet ist. Dabei kann die Unterteilung der Entlüftungseinrichtung in einem Volllastpfad und ein Teillastpfad unmittelbar stromab des Ölnebelabscheiders realisiert sein. In diesem Fall sind besagte Ventile insbesondere unmittelbar stromab der Trennung in Volllastpfad und Teillastpfad angeordnet. Die Ventile können dabei eine beliebige Art aufweisen, wobei sie vorzugsweise als Rückschlagventile aufgebaut sind. Die Entlüftungseinrichtung weist also insbesondere innerhalb des Volllastpfades und/oder des Teillastpfades jeweils ein Rückschlagventil auf. Die Rückschlagventile dienen dabei insbesondere dem Zweck, die fluidische Verbindung zwischen dem Kurbelgehäuse und der Luftzuführung für einen Gasfluss vom Kurbelgehäuse zur Luftzuführung zu gewährleisten und einen entgegengesetzten Fluss zu unterbinden. Dies ist insbesondere dann sinnvoll, wenn das Kurbelgehäuse gegenüber der Luftzuführung einen Unterdruck aufweist.

Weisen der Teillastpfad und der Volllastpfad jeweils ein Ventil auf, die insbesondere stromabseitig und unmittelbar am Ölnebelabscheider angeordnet sind, so sind der Volllastpfadanschluss und der Teillastpfadanschluss bei einer weiteren bevorzugten Ausführungsform unmittelbar an den Ventilen angeordnet. D.h. also insbesondere, dass der Volllastpfadanschluss unmittelbar stromabseitig des Ventils des Volllastpfades angeordnet ist. Zudem ist also insbesondere der Teillastpfadanschluss unmittelbar stromabseitig des Ventils des Teillastpfades angeordnet. Dabei können der Volllastpfadanschluss und/oder der Teillastpfadanschluss beispielsweise in besagte Ventile, insbesondere in ein Gehäuse des Ventils, integriert sein.

Es sei darauf hingewiesen, dass der Ölnebelabscheider und die Ventile des Volllastpfades bzw. des Teillastpfades gemeinsam innerhalb eines Gehäuses der Brennkraftmaschine angeordnet sein können. Sie können also beispielsweise in einer Zylinderkopfhaube der Brennkraftmaschine angeordnet sein.

Gemäß einer weiteren bevorzugten Ausführungsform, ist der Volllastpfadanschluss und/oder der Teillastpfadanschluss der Adaptereinrichtung unmittelbar an der Zylinderkopfhaube angeordnet. Dabei können der Volllastpfadanschluss und der Teillastpfadanschluss insbesondere in die Zylinderkopfhaube integriert sein. Dies ist vorzugsweise dann der Fall, wenn der Ölnebelabscheider und/oder die Ventile des Volllastpfades und des Teillastpfades innerhalb der Zylinderkopfhaube angeordnet sind. Die Entlüftungseinrichtung erstreckt sich hier also in die Zylinderkopfhaube hinein.

Um eine fehlerhafte Montage des Volllastpfadanschlusses und des Teillastpfadanschlusses an den zweiten und an den vierten Anschluss der Adaptereinrichtung, insbesondere eine verkehrte Verbindung zu vermeiden, sind die Adaptereinrichtung und der zugehörige Abschnitt der Entlüftungseinrichtung derart ausgebildet, dass eine derartige Verwechslung bzw. fehlerhafte Verbindung nicht möglich ist. Es sind also insbesondere die Pfadseite der Adaptereinrichtung und ein damit zusammenwirkender Pfadabschnitt der Entlüftungseinrichtung komplementär zueinander ausgebildet. Hierzu weist die Adaptereinrichtung auf ihrer Pfadseite, d.h. also stromaufseitig, bei einer besonders bevorzugten Ausführungsform, eine Aufnahme auf, während der zugehörige Abschnitt der Entlüftungseinrichtung, also insbesondere der Pfadabschnitt, einen Dorn oder Vorsprung aufweist. Dabei sind die Aufnahme der Adaptereinrichtung und der Vorsprung der Entlüftungseinrichtung komplementär zueinander ausgebildet. Die Aufnahme und der Pfad sind also insbesondere derart ausgebildet, dass der Vorsprung passgenau in die Aufnahme angeordnet ist. Die Aufnahme und der Vorsprung sind weiter derart in/an die Adaptereinrichtung/Entlüftungseinrichtung angeordnet, und/oder sind derart geformt, dass sie lediglich eine vorgegebene Stellung zum Verbinden des Volllastpfadanschlusses und des Teillastpfadanschlusses an die Adaptereinrichtung zulassen. Die Adaptereinrichtung weist also insbesondere stromaufseitig, d.h. an ihrer Pfadseite, eine Aufnahme auf, die insbesondere außerhalb des zweiten und des vierten Anschlusses angeordnet sind, während der Pfadabschnitt der Entlüftungseinrichtung einen komplementär geformten Vorsprung aufweist, der insbesondere außerhalb des Volllastpfadanschlusses und des Teillastpfadanschlusses angeordnet ist. Bei einer äquivalenten Lösung weist die Entlüftungseinrichtung, insbesondere der Pfadabschnitt der Entlüftungseinrichtung, eine Aufnahme auf, während die Adaptereinrichtung, insbesondere auf der Pfadseite, einen zu dieser Aufnahme komplementär geformten und damit zusammenwirkenden Vorsprung aufweist. Auch Ausführungsformen, bei denen die Adaptereinrichtung und/oder die Entlüftungseinrichtung mehrere Aufnahmen und/oder komplementär geformte Vorsprunge aufweisen, sind zielführend und gehören daher zum Umfang dieser Erfindung.

Bei einer weiteren Ausführungsform weisen der Volllastpfadanschluss und der Teillastpfadanschluss unterschiedliche Formen und/oder unterschiedliche Größen auf. Damit weisen auch der zweite und der vierte Anschluss der Adaptereinrichtung zweckmäßig unterschiedliche Formen und/oder Größen auf. Dies dient nun insbesondere dem Zweck, eine fehlerhafte Montage zu vermeiden. Es wird also insbesondere vermieden, dass der Volllastpfadanschluss mit dem vierten Anschluss der Adaptereinrichtung verbunden wird bzw. es wird vermieden, dass der Teillastpfadanschluss mit dem zweiten Anschluss der Adaptereinrichtung verbunden wird. Zudem oder alternativ weisen der Volllastleitungsschluss und der Teillastleitungsanschluss unterschiedliche Formen und/oder Größen auf. Somit sind der erste und der dritte Anschluss der Adaptereinrichtung zweckmäßig unterschiedlich ausgebildet. Auch dies dient insbesondere dem Zweck, eine fehlerhafte Montage des Volllastleitungsanschlusses und des Teillastleitungsanschlusses an die Adaptereinrichtung zu vermeiden. Es wird also insbesondere vermieden, dass der Volllastleitungsanschluss mit dem zweiten Anschluss der Adaptereinrichtung verbunden ist, während der Teillastleitungsanschluss mit dem ersten Anschluss der Adaptereinrichtung verbunden ist.

Die unterschiedliche Ausbildung des Volllastpfadanschlusses und des Teillastpfadanschlusses bzw. des Volllastleitungsanschlusses und des Teillastleitungsanschlusses haben dabei nicht zweckmäßig zur Folge, dass der Volllastpfad und der Teillastpfad bzw. die Volllastleitung und die Teillastleitung unterschiedliche Formen und Größen aufweisen. Bei einer bevorzugten Ausführungsform sind jedoch der Volllastpfad und die Volllastleitung größer ausgebildet als der Teillastpfad und die Teillastleitung. Der Volllastpfad und die Volllastleitung stellen also den sie durchfließenden Gasen einen größeren Querschnitt zur Verfügung als die Teillastleitung bzw. der Teillastpfad. Dies ist insbesondere deshalb sinnvoll, weil die Brennkraftmaschine unter Volllast größere Gasmengen umsetzt als unter Teillast. Eine derartige Ausbildung der Pfade und der Leitungen hat jedoch nicht zwingend zur Folge, dass die Pfade und die Leitungen über den gesamten Verlauf der Entlüftungseinrichtung die gleiche Form und/oder Größe aufweisen.

Bei einer weiteren Ausführungsform ist die Volllastleitung als ein Schlauch ausgebildet. Optional oder zusätzlich ist die Teillastleitung als ein Schlauch ausgebildet. Die Ausbildung der Leitungen als Schlauch gewährleistet dabei eine kostengünstige Herstellung sowie die Flexibilität dieser Leitungen, welche insbesondere die Montage der Entlüftungseinrichtung erleichtert.

Bei einer bevorzugten Ausführungsform sind der Volllastleitungsanschluss und/oder der Teillastpfadanschluss als Teil dieser Schläuche ausgebildet. Der Volllastleitungsanschluss und/oder der Teillastleitungsanschluss sind also insbesondere als stromaufseitige Enden der Schläuche ausgebildet. Diese Enden können dabei eine vom Rest des Schlauchs unterschiedliche Form und/oder Größe aufweisen. Der Volllastleitungsanschluss und/oder der Teillastleitungsanschluss können also insbesondere als ausgedehnte Enden der Volllastleitung bzw. der Teillastleitung ausgebildet sein.

Die Ausbildung der Volllastleitung und/der Teillastleitung als Schläuche bzw. die Ausbildung des Volllastleitungsanschlusses und/oder des Teillastleitungsanschlusses als Schlauchenden erleichtern zudem insbesondere die Verbindung zwischen den Leitungsanschlüssen und den Anschlüssen der Adaptereinrichtung. Hierzu weisen der erste Anschluss und/oder der dritte Anschluss der Adaptereinrichtung bei einer bevorzugten Ausführungsform eine sägezahnartige Form auf. Die Sägezähne des ersten und/oder des dritten Anschlusses der Adaptereinrichtung sind dabei vorzugsweise radial entlang der ersten und/oder des dritten Anschlusses angeordnet. Der erste und/oder der dritte Anschluss der Adaptereinrichtung und somit die entsprechenden Sägezähne sind dabei vorzugsweise innerhalb des Volllastleitungsanschlusses und/oder des Teillastleitungsanschlusses angeordnet. Zusätzlich kann der erste Anschluss und/oder der vierte Anschluss der Adaptereinrichtung einen größeren Radius aufweisen als der zugehörige Volllastleitungsanschluss und/oder Teillastleitungsanschluss. Dies führt zusammen mit der Anordnung der entsprechenden Anschlüsse der Adaptereinrichtung innerhalb des Volllastleitungsanschlusses und/oder des Teillastleitungsanschlusses zu einer festen Verbindung zwischen den Leitungsanschlüssen und der Adaptereinrichtung, insbesondere durch den Aufbau einer Spannung an den entsprechenden Enden der Schläuche.

Entsprechend können auch der Volllastpfad und/oder der Teillastpfad als Schläuche ausgebildet sein. Auch hier sind dann der Volllastpfadanschluss und/oder der Teillastpfadanschluss vorzugsweise als stromabseitige Enden dieser Schläuche ausgebildet. Eine Verbindung zur Adaptereinrichtung kann hier durch eine Anordnung der Schlauchenden innerhalb der zugehörigen Anschlüsse der Adaptereinrichtung, also des zweiten und des vierten Anschlusses, realisiert sein. Dazu können der Volllastpfadanschluss und/oder der Teillastpfadanschluss an ihren stromabseitigen Enden eine Schulter, die insbesondere radial verläuft, aufweisen. Diese Schultern können zudem jeweils mit einem innerhalb des zweiten und des vierten Anschlusses angeordneten Ringes zusammenwirken und somit für eine Verbindung zwischen den zugehörigen Anschlüssen sorgen.

Die oben erwähnten Realisierungen der Verbindungen zwischen den zugehörigen Anschlüssen der Volllastzuführung bzw. der Teillastzuführung haben insbesondere zur Folge, dass die Leistungsanschlüsse eine stärkere Verbindung zur Adaptereinrichtung aufweisen als die Pfadanschlüsse. Dies ist bei einer besonders bevorzugten Ausführungsform der Fall, das heißt die Anschlüsse zwischen den Leitungen und der Adaptereinrichtung sind unabhängig von der jeweiligen Realisierung der Verbindung stärker miteinander verbunden, als die Pfadanschlüsse mit den zugehörigen Anschlüssen der Adaptereinrichtung. Dies hat insbesondere zur Folge, dass ein Lösen von einer der Pfadanschlüsse vom zugehörigen Anschluss der Adaptereinrichtung zum Lösen des anderen Pfadanschlusses vom zugehörigen Adapteranschluss führt.

Entsprechend einer weiteren Ausführungsform, weist die Entlüftungseinrichtung ein Druckventil auf. Das Druckventil ist dabei vorzugsweise zwischen dem Kurbelgehäuse und der Adaptereinrichtung angeordnet. Bei einer besonders bevorzugten Ausführungsform ist das Druckregelventil dabei unmittelbar stromabseitig des Ölnebelabscheiders angeordnet. Das Druckregelventil kann dabei sowohl dem Volllastpfad als auch dem Teillastpfad zugeordnet sein. Es führt also eine gemeinsame Pfadzuführung des Teillastpfades und des Volllastpfades insbesondere vom Ölnebelabscheider stromabseitig zum Druckregelventil. Eine Teilung der Pfadzuführung in den Volllastpfad und in den Teillastpfad erfolgt also insbesondere unmittelbar stromabseitig des Druckregelventils. Das Druckregelventil kann dabei, insbesondere wenn der Ölnebelabscheider innerhalb der Zylinderkopfhaube angeordnet ist, innerhalb der Zylinderkopfhaube angeordnet sein.

Es versteht sich, dass die Adaptereinrichtung als wichtiger Bestandteil der vorliegenden Erfindung auch als Solche zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Ausführungsform einer Brennkraftmaschine,
- Fig. 2: einen Längsschnitt einer Entlüftungseinrichtung,
- Fig. 3: Querschnitte durch eine Entlüftungseinrichtung und eine zugehörige Adaptereinrichtung.

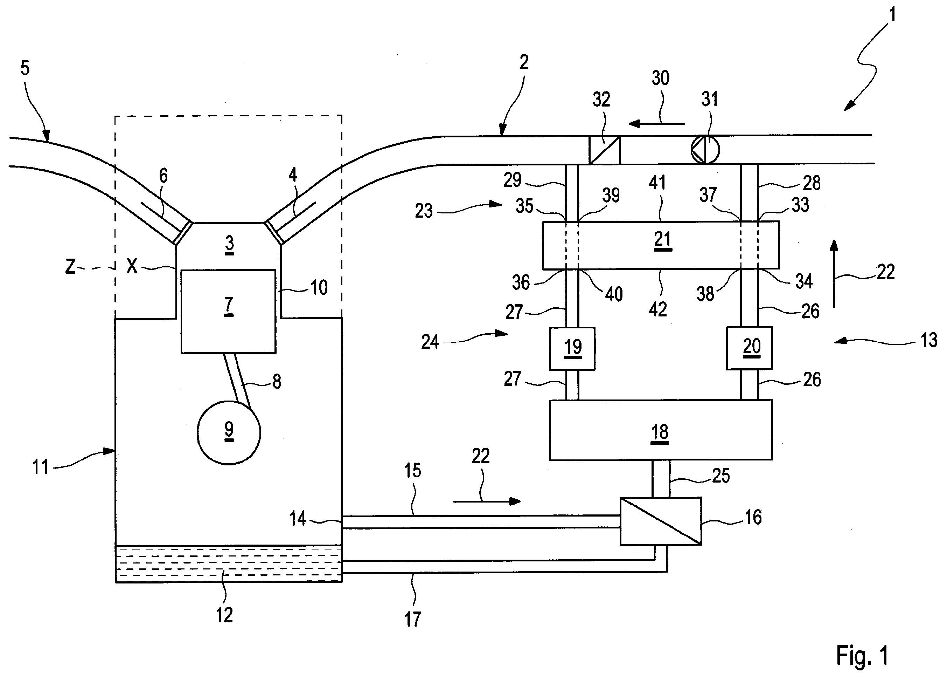

Entsprechend Fig. 1 weist eine Brennkraftmaschine 1 eine Luftzuführung 2 auf, die einen Brennraum 3 der Brennkraftmaschine 1 mit Luft versorgt. Hierzu ist die Luftzuführung 2 fluidisch mit dem Brennraum 3 verbunden, wobei ein Einlassventil 4 die Versorgung des Brennraums 3 mit Luft über die Luftzuführung 2 regelt. Der Brennraum 3 ist weiter mit einer Abgasabführung 5 fluidisch verbunden, wobei ein Ablassventil 6 den Fluss des Abgases aus dem Brennraum 3 steuert. Der Brennraum 3 ist auf der dem Einlassventil 4 bzw. dem Auslassventil 5 gegenüber liegenden Seite durch einen Kolben 7 begrenzt, der axial beweglich in einen den Brennraum 3 in Umfangsrichtung einschließenden Zylinder X angeordnet ist. Der Kolben 7 ist auf der dem Brennraum 3 abgewandten Seite über ein Pleuel 8 mit einer Kurbelwelle 9 verbunden. Dabei können die im Brennraum 3 entstehenden Abgase insbesondere durch Ringspalte 10 zwischen dem Zylinder X und dem Kolben 7 in ein Kurbelgehäuse 11 gelangen. Das Kurbelgehäuse 11 umschließt dabei die Kurbelwelle 9 und weist ein Ölreservoir 12 auf. Die somit ins Kurbelgehäuse 11 gelangten und sogenannten "Blow-by-Gase" werden über eine Entlüftungseinrichtung 13 vom Kurbelgehäuse 11 zur Luftzuführung 2 geführt. Hierzu weist das Kurbelgehäuse 11 einen Kurbelgehäuseausgang 14 auf, der mittels einer Zuführung 15 fluidisch mit einem Ölnebelabscheider 16 verbunden ist. Der Ölnebelabscheider 16 ist weiter durch eine Ölleitung 17 mit dem Ölreservoir 12 des Kurbelgehäuses 11 verbunden. Somit kann das vom Blow-by-Gas getrennte Öl dem Ölreservoir 12 zugeführt werden. Die Zuführung 15 führt das Blow-by-Gas über den Ölnebelabscheider 16, ein Druckregelventil 18, zwei Rückschlagventile 19, 20 und eine Adaptereinrichtung 21 zur Luftzuführung 2. Die Flussrichtung der Blow-by-Gase innerhalb der Entlüftungseinrichtung 13 ist dabei durch einen Pfeil 22 angedeutet. Eine Zylinderhaube Z umschließt weiter insbesondere Teile des Zylinders X, der Luftzuführung 2 sowie der Abgasabführung 5.

Die Adaptereinrichtung 21 unterteilt dabei die Zuführung 15 stromabseitig in einen Leitungsabschnitt 23 und stromaufseitig in einen Pfadabschnitt 24. Der Ölnebelabscheider 16 ist also innerhalb des Pfadabschnittes 24 bzw. einer Pfadzuführung 25 angeordnet und stromaufseitig fluidisch mit dem Kurbelgehäuse 11 verbunden. Der Ölnebelabscheider 16 ist weiter stromabseitig durch einen einzigen Pfad der Pfadzuführung 25 fluidisch mit dem Druckregelventil 18 verbunden. Die Pfadzuführung 25 mündet also stromaufseitig des Druckregelventils 18 in das Druckregelventil 18. Stromabseitig des Druckregelventils 18 ist die Pfadzuführung 25 in einen Volllastpfad 26 und einen Teillastpfad 27 unterteilt. Der in der gezeigten Darstellung rechts angeordnete Volllastpfad 26 verbindet dabei das Druckregelventil 18 mit einem Rückschlagventil 20 fluidisch. Der Teillastpfad 27 stellt weiter eine fluidische Verbindung zwischen dem Druckregelventil 18 und dem weiteren Rückschlagventil 19 innerhalb des Teillastpfades 27 her. Der Volllastpfad 26 und der Teillastpfad 27 verbinden weiter jeweils stromabseitig der Rückschlagventile 19, 20 diese Rückschlagventile 19, 20 mit der Adaptereinrichtung 21. Die Adaptereinrichtung 21 verbindet dabei den Volllastpfad 26 fluidisch mit einer Volllastleitung der Leitungszuführung 23. Die Adaptereinrichtung 21 verbindet weiter den Teillastpfad 27 fluidisch mit einer Teillastleitung 29 des Leitungsabschnittes 23. Der Leitungsabschnitt 23 ist also stromabseitig der Adaptereinrichtung 21 in die Volllastleitung 28 und die Teillastleitung 29 unterteilt. Die Volllastleitung 28 mündet dabei bezüglich einer mit einem Pfeil 30 angedeuteten Luftflussrichtung der Luftzuführung 2 stromauf einer Ladeeinrichtung 31 der Luftzuführung 2 in die Luftzuführung 2, wogegen die Teillastleitung 29 stromabseitig einer Drosseleinrichtung 32 der Luftzuführung 2 in die Luftzuführung 2 einmündet. Somit sind die Volllastleitung 28 und die Teillastleitung 29 jeweils fluidisch mit der Luftzuführung 2 verbunden.

Zur fluidischen Verbindung des Volllastpfades 26 mit der Volllastleitung 28 sowie des Teillastpfades 27 mit der Teillastleitung 29 weist die Adaptereinrichtung 21 vier Anschlüsse 33, 34, 35, 36 auf. Ein erster Anschluss 33 der Adaptereinrichtung 21 ist dabei stromabseitig der Adaptereinrichtung 21 angeordnet und komplementär zu einem Volllastleitungsanschluss 37 der Volllastleitung 28 geformt. Der Volllastleitungsanschluss 37 ist hierzu an einem stromaufseitigen Ende der Volllastleitung 28 ausgebildet und stellt zusammen mit dem ersten Anschluss 33 der Adaptereinrichtung 21 eine nach außen dichte fluidische Verbindung zwischen der Volllastleitung 28 und dem ersten Anschluss 33 der Adaptereinrichtung 21 her. Der erste Anschluss 33 der Adaptereinrichtung 21 ist weiter innerhalb der Adaptereinrichtung 21 fluidisch mit einem zweiten Anschluss 34 der Adaptereinrichtung 21 verbunden. Der zweite Anschluss 34 der Adaptereinrichtung 21 wirkt dabei mit einem Volllastpfadanschluss 38 zusammen, wobei der Volllastpfadanschluss 38 an einem stromabseitigen Ende des Volllastpfades 26 angeordnet ist. Der zweite Anschluss 34 der Adaptereinrichtung 21 sowie der Volllastpfadanschluss 38 sind dabei derart komplementär zueinander ausgebildet, dass sie eine nach außen dichte fluidische Verbindung herstellen. Die Adaptereinrichtung 21 weist stromabseitig einen dritten Anschluss 35 auf, der mit einem Teillastleitungsanschluss 39 der Teillastleitung 29 zusammenwirkt und somit eine fluidische Verbindung herstellt. Hierzu sind der dritte Anschluss 35 der Adaptereinrichtung 21 sowie der Teillastleitungsanschluss 39 komplementär zueinander geformt. Der dritte Anschluss 35 der Adaptereinrichtung 21 ist zudem innerhalb der Adaptereinrichtung 21 fluidisch mit einem vierten Anschluss 36 der Adaptereinrichtung 21 verbunden. Der vierte Anschluss 36 der Adaptereinrichtung 21 ist weiter mit einem Teillastpfadanschluss 40, der an einem stromabseitigen Ende des Teillastpfades 27 angeordnet ist, verbunden. Der erste und der dritte Anschluss 33, 35 der Adaptereinrichtung 21 sind also auf einer Leitungsseite 41 der Adaptereinrichtung 21 angeordnet, während der zweite Anschluss 34 und der vierte Anschluss 36 der Adaptereinrichtung 21 auf einer Pfadseite 42 der Adaptereinrichtung 21 angeordnet sind.

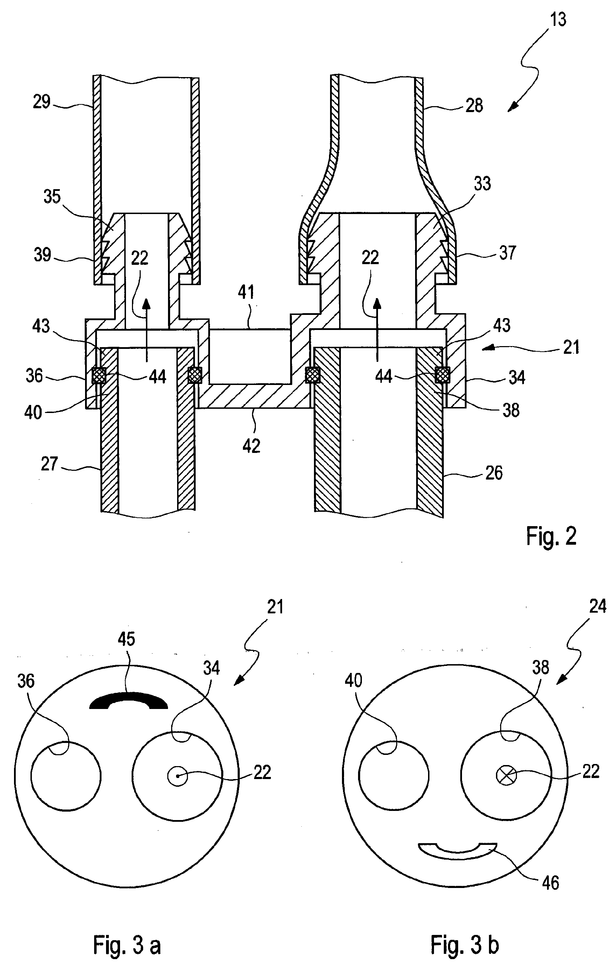

Eine mögliche Realisierung der Verbindungen zwischen Anschlüssen der Entlüftungseinrichtung 13 ist in Fig. 2 gezeigt. In der hier gezeigten Ausführungsform sind sowohl die Volllastleitung 28 und die Teillastleitung 29 als auch der Volllastpfad 26 und der Teillastpfad 27 als Schläuche ausgebildet. Der Volllastleitungsanschluss 37 ist dabei an einem stromabseitigen Ende der Volllastleitung 28 angeordnet und als eine Ausdehnung der Volllastleitung 28 ausgebildet. Der sägezahnartig ausgebildete erste Anschluss 33 der einstückig ausgebildeten Adaptereinrichtung 21 ist dabei innerhalb des Volllastleitungsanschlusses 37 angeordnet. Durch eine größere Ausbildung spannt der erste Anschluss 33 der Adaptereinrichtung 21 zudem den Volllastleitungsanschluss 37 und sorgt somit für eine feste Verbindung zwischen dem ersten Anschluss 33 der Adaptereinrichtung 21 und des Volllastleitungsanschlusses 37. Der auf der Leitungsseite 41 angeordnete erste Anschluss 33 der Adaptereinrichtung geht stromaufseitig durch einen stufenartigen Übergang in den zweiten Anschluss 34 der Adaptereinrichtung 21 über. Der am stromabseitigen Ende des Volllastpfades 26 angeordnete Volllastpfadanschluss 38 ist dabei innerhalb des zweiten Anschlusses 34 der Adaptereinrichtung 21 angeordnet. Der Volllastpfadanschluss 38 weist dabei am stromabseitigen Rand eine radial angeordnete Schulter 43 auf, die durch ein Zusammenwirken mit einem radial innerhalb des zweiten Anschlusses 34 der Adaptereinrichtung 21 angeordneten Ringes 44 eine Verbindung zwischen dem zweiten Anschluss 34 und dem Volllastpfadanschluss 38 herstellen. Die Verbindung zwischen dem dritten Anschluss 35 und dem Teillastleitungsanschluss 39 ist auf die gleiche Art sichergestellt, wie die Verbindung zwischen dem ersten Anschluss 33 und dem Volllastleitungsanschluss 37, wobei der Teillastleitungsanschluss 39 am stromaufseitigen Ende der Teillastleitung 29 angeordnet ist im Gegensatz zum Volllastleitungsanschluss 37 nicht als Ausdehnung der Volllastleitung 28 ausgebildet ist. Zudem sind die Volllastleitung 28 und der Volllastpfad 26 größer ausgebildet als die Teillastleitung 29 und der Teillastpfad 27.

Zur Vermeidung eines verkehrten Anschlusses der Adaptereinrichtung 21 mit dem zugehörigen Pfadabschnitt 24 der Entlüftungseinrichtung 13 weist die Adaptereinrichtung 21, entsprechend der Fig. 3a, auf ihrer Pfadseite 42 einen Vorsprung 45 auf, der mit einer wie in der Fig. 3b gezeigten Aufnahme 46 des Pfadabschnittes 24 zusammenwirkt. Dazu sind der Vorsprung 45 und die Aufnahme 46, wie in den Querschnitten der Fig. 3a und 3b gezeigt, komplementär zueinander ausgebildet. Zudem weisen der zweite Anschluss 34 und der vierte Anschluss 36 der Adaptereinrichtung 21 unterschiedliche Größen auf, womit auch der Volllastpfadanschluss 38 sowie der Teillastpfadanschluss 40 zweckmäßig unterschiedliche Größen aufweisen. Dies stellt insbesondere eine vorgegebene Montagestellung fest, womit ein Fehler bei der Montage der Adaptereinrichtung 21 mit den entsprechenden Pfadanschlüssen 38, 40 des Pfadabschnittes 24 vermieden wird.

## Patentansprüche

1. Brennkraftmaschine (1), insbesondere eines Kraftfahrzeuges, mit einer Luftzuführung (2) zur Versorgung der Brennkraftmaschine (1) mit Luft und einem zumindest eine Kurbelwelle (9) umschließenden Kurbelgehäuse (11), wobei
- die Luftzuführung (2) eine Ladeeinrichtung (31) und eine Drosseleinrichtung (32) aufweist,
- die Ladeeinrichtung (31) stromauf der Drosseleinrichtung (32) angeordnet ist,
- das Kurbelgehäuse (11) durch eine Entlüftungseinrichtung (13) mit der Luftzuführung (2) fluidisch verbunden ist,
- eine Volllastleitung (28) der Entlüftungseinrichtung (13) einerseits einen Volllastleitungsanschluss (37) aufweist und andererseits stromauf der Ladeeinrichtung (31) in die Luftzuführung (2) einmündet,
- eine Teillastleitung (29) der Entlüftungseinrichtung (13) einerseits einen Teillastleitungsanschluss (39) aufweist und andererseits stromab der Drosseleinrichtung (32) in die Luftzuführung (2) einmündet,
**dadurch gekennzeichnet dass**
- - eine Adaptereinrichtung (21) zwischen der Volllastleitung (28) und einem Volllastpfad (26) der Entlüftungseinrichtung (13) angeordnet ist und diese fluidisch miteinander verbindet,
- die Adaptereinrichtung (21) zwischen der Teillastleitung (29) und einem Teillastpfad (27) der Entlüftungseinrichtung (13) angeordnet ist und diese fluidisch miteinander verbindet,
- die Adaptereinrichtung (21) einen ersten Anschluss (33) aufweist, der komplementär zum Volllastleitungsanschluss (37) ausgebildet und mit diesem verbunden ist,
- die Adaptereinrichtung (2) einen zweiten Anschluss (34) aufweist, der komplementär zu einem Volllastpfadanschluss (38) des Volllastpfades (26) ausgebildet und mit diesem koppelbar ist,
- der erste Anschluss (33) und der zweite Anschluss (34) in der Adaptereinrichtung (21) fluidisch miteinander verbunden sind,
- die Adaptereinrichtung (2) einen dritten Anschluss (35) aufweist, der komplementär zum Teillastleitungsanschluss (39) ausgebildet und mit diesem verbunden ist,
- die Adaptereinrichtung (21) einen vierten Anschluss (36) aufweist, der komplementär zu einem Teillastpfadanschluss (40) des Teillastpfades (27) ausgebildet und mit diesem koppelbar ist,
- der dritte Anschluss (35) und der vierte Anschluss (36) in der Adaptereinrichtung (21) fluidisch miteinander verbunden sind.

2. Brennkraftmaschine nach Anspruch 1,
**dadurch gekennzeichnet,**
**dass** ein Ölnebelabscheider (16) der Entlüftungseinrichtung (13) zum Trennen von Öl und Gas zwischen dem Kurbelgehäuse (11) und der Adaptereinrichtung (21) angeordnet ist und insbesondere dem Teillastpfad (27) und dem Volllastpfad (26) zugeordnet ist.

3. Brennkraftmaschine nach Anspruch 2,
**dadurch gekennzeichnet,**
**dass** der Volllastpfadanschluss (38) und der Teillastpfadanschluss (40) unmittelbar am Ölnebelabschneider (16) angeordnet sind.

4. Brennkraftmaschine nach Anspruch 1 oder 2,
**dadurch gekennzeichnet,**
- **dass** der Volllastpfad (26) zumindest ein Ventil, insbesondere ein Rückschlagventil (20), aufweist, das insbesondere stromab des Ölnebelabscheiders (16) angeordnet ist, und
- **dass** der Teillastpfad (27) zumindest ein Ventil, insbesondere ein Rückschlagventil (19), aufweist, das insbesondere stromab des Ölnebelabscheiders (16) angeordnet ist.

5. Brennkraftmaschine nach Anspruch 4,
**dadurch gekennzeichnet,**
**dass** der Volllastpfadanschluss (38) und der Teillastpfadanschluss (40) unmittelbar an den Ventilen angeordnet sind.

6. Brennkraftmaschine nach Anspruch 1 oder 2,
**dadurch gekennzeichnet,**
**dass** der Volllastpfadanschluss (38) und der Teillastpfadanschluss (40) unmittelbar eine einer Zylinderkopfhaube (Z) der Brennkraftmaschine (1) angeordnet sind.

7. Brennkraftmaschine nach einem der Ansprüche 1 bis 6,
**dadurch gekennzeichnet,**
**dass** der erste (33) und der dritte (35) Anschluss der Adaptereinrichtung (21) auf einer Leitungsseite (41) der Adaptereinrichtung (21) angeordnet sind und der zweite (34) und der vierte (36) Anschluss auf einer, insbesondere gegenüberliegenden, Pfadseite (42) der Adaptereinrichtung angeordnet sind.

8. Brennkraftmaschine nach einem der Ansprüche 1 bis 7,
**dadurch gekennzeichnet,**
**dass** die Volllastleitung (28) als ein Schlauch ausgebildet ist und/oder die Teillastleitung (29) als ein Schlauch ausgebildet ist.

9. Brennkraftmaschine nach Anspruch 7,
**dadurch gekennzeichnet,**
**dass** der Volllastleitungsanschluss (37) und/oder der Teillastleitungsanschluss (39) als Teil dieser Schläuche, insbesondere als ein Endabschnitt der Schläuche, ausgebildet sind/ist.

10. Brennkraftmaschine nach Anspruch 7 oder 8,
**dadurch gekennzeichnet,**
**dass** der erste Anschluss (33) und der dritte Anschluss (35) der Adaptereinrichtung (21) insbesondere sägezahnartig ausgebildet sind und innerhalb der zugehörigen Schläuche und/oder Leitungsanschlüsse (37, 39) angeordnet und somit mit ihnen verbunden sind.

11. Brennkraftmaschine nach einem der Ansprüche 1 bis 9,
**dadurch gekennzeichnet,**
- **dass** der Volllastpfadanschluss (38) in den zweiten Anschluss (34) der Adaptereinrichtung (21) eingesteckt und damit verbunden ist, und/oder
- der Teillastpfadanschluss (40) in den vierten Anschluss (36) der Adaptereinrichtung (21) eingesteckt und damit verbunden ist.

12. Brennkraftmaschine nach einem der Ansprüche 1 bis 10,
**dadurch gekennzeichnet,**
- **dass** die Adaptereinrichtung (21), insbesondere auf der Pfadseite (42), eine Aufnahme (46) aufweist und der zugehörige Abschnitt der Entlüftungseinrichtung (13), insbesondere der Pfadabschnitt (45), einen zur Aufnahme (46) komplementär geformten Vorsprung (45) aufweist, und/oder
- **dass** die Adaptereinrichtung (21), insbesondere auf der Pfadseite (42), einen Vorsprung (45) aufweist und der zugehörige Abschnitt der Entlüftungseinrichtung (13), insbesondere der Pfadabschnitt (24), eine zum Vorsprung (46) komplementär geformte Aufnahme (46) aufweist.

13. Brennkraftmaschine nach einem der Ansprüche 1 bis 11,
**dadurch gekennzeichnet,**
**dass** die Entlüftungseinrichtung (13) ein Druckregelventil (18) aufweist, das zwischen dem Kurbelgehäuse (11) und der Adaptereinrichtung (21) angeordnet ist und insbesondere dem Teillastpfad (27) und dem Volllastpfad (26) zugeordnet ist.

14. Brennkraftmaschine nach einem der Ansprüche 2 bis 12,
**dadurch gekennzeichnet,**
**dass** die Brennkraftmaschine (1) eine Ölleitung (17) zum Rückfluss des Öls vom Ölnebelabscheider (16) zum Kurbelgehäuse (11) aufweist.

15. Adaptereinrichtung (21) für eine Brennkraftmaschine (1) nach einem der Ansprüche 1 bis 14.

## Claims

1. A combustion engine (1), in particular of a motor vehicle, with an air feed (2) for feeding the combustion engine (1) with air and a crankcase (11) at least enclosing a crankshaft (9), wherein
- the air feed (2) comprises a charging device (31) and a throttling device (32),
- the charging device (31) is arranged upstream of the throttling device (32),
- the crankcase (11) is fluidically connected to the air feed (2) through a ventilation device (13),
**characterized in that**
- a full load line (28) of the ventilation device (13) on the one hand comprises a full load line connection (37) and on the other hand leads into the air feed (2) upstream of the charging device (31),
- a part load line (29) of the ventilation device (13) on the one hand comprises a part load line connection (39) and on the other hand leads into the air feed (2) downstream of the throttling device (32),
- an adapter device (21) is arranged between the full load line (28) and a full load path (26) of the ventilation device (13), fluidically connecting these to each other,
- the adapter device (21) is arranged between the part load line (29) and a part load path (27) of the ventilation device (13), fluidically connecting these to each other,
- the adapter device (21) comprises a first connection (33), which is designed complementarily to the full load line connection (37) and connected to the latter,
- the adapter device (21) comprises a second connection (34), which is designed complementarily to a full load path connection (38) of the full load path (26) and can be coupled to the latter,
- the first connection (33) and the second connection (34) in the adapter device (21) are fluidically connected to each other,
- the adapter device (2) comprises a third connection (35), which is designed complementarily to the part load line connection (39) and connected to the latter,
- the adapter device (21) comprises a fourth connection (36), which is designed complementarily to a part load path connection (40) of the part load path (27) and can be coupled to the latter,
- the third connection (35) and the fourth connection (36) in the adapter device (21) are fluidically connected to each other.

2. The combustion engine according to Claim 1, **characterized in that** an oil mist separator (16) of the ventilation device (13) for separating oil and gas is arranged between the crankcase (11) and the adapter device (21) and in particular is assigned to the part load path (27) and the full load path (26).

3. The combustion engine according to Claim 2, **characterized in that** the full load path connection (38) and the part load path connection (40) are directly arranged on the oil mist separator (16).

4. The combustion engine according to Claim 1 or 2, **characterized**
- **in that** the full load path (26) comprises at least one valve, in particular a non-return valve (20), which in particular is arranged downstream of the oil mist separator (16), and
- **in that** the part load path (27) comprises at least one valve, in particular a non-return valve (19), which in particular is arranged downstream of the oil mist separator (16).

5. The combustion engine according to Claim 4, **characterized in that** the full load path connection (38) and the part load path connection (40) are arranged directly on the valves.

6. The combustion engine according to Claim 1 or 2, **characterized in that** the full load path connection (38) and the part load path connection (40) are arranged directly on a cylinder head cover (Z) of the combustion engine (1).

7. The combustion engine according to any one of the Claims 1 or 6, **characterized in that** the first (33) and the third connection (35) of the adapter device (21) are arranged on a line side (41) of the adapter device (21) and the second (34) and the fourth connection (36) are arranged on a in particular opposite path side (42) of the adapter device.

8. The combustion engine according to any one of the Claims 1 or 7, **characterized in that** the full load line (28) is embodied as a hose and/or the part load line (29) is embodied as a hose.

9. The combustion engine according to Claim 7, **characterized in that** the full load line connection (37) and/or the part load line connection (39) is/are embodied as part of these hoses, in particular as and end section of the hoses.

10. The combustion engine according to Claim 7 or 8, **characterized in that** the first connection (33) and the third connection (35) of the adapter device (21) are embodied in particular in sawtooth-like and are arranged within the associated hoses and/or line connections (37, 39) and thus are connected to these.

11. The combustion engine according to any one of the Claims 1 or 9, **characterized**
- **in that** the full load path connection (38) is inserted into and thus connected to the second (34) of the adapter device (21), and/or
- **in that** the part load path connection (40) is inserted into and thus connected to the fourth connection (36) of the adapter device (21).

12. The combustion engine according to any one of the Claims 1 or 10, **characterized**
- **in that** the adapter device (21), in particular on the path side (42), comprises a receptacle (46) and the associated section of the ventilation device (13), in particular the path section (45), comprises a protrusion (45) that is shaped complementarily to the receptacle (46), and/or
- **in that** the adapter device (21), in particular on the path side (42), comprises a protrusion (45) and the associated section of the ventilation device (13), in particular the path section (24), comprises a receptacle (46) that is shaped complementarily to the protrusion (45).

13. The combustion engine according to any one of the Claims 1 to 11, **characterized in that** the ventilation device (13) comprises a pressure control valve (18), which is arranged between the crankcase (11) and the adapter device (21) and in particular is assigned to the part load path (27) and the full load path (26).

14. The combustion engine according to any one of the Claims 2 to 12, **characterized in that** the combustion engine (1) comprises an oil line (17) for the return flow of the oil from the oil mist separator (16) to the crankcase (11).

15. An adapter device (21) for a combustion engine (1) according to any one of the Claims 1 to 14.

## Revendications

1. Moteur à combustion interne (1), notamment d'un véhicule automobile, comportant une alimentation en air (2) pour alimenter le moteur à combustion interne (1) en air et un logement de vilebrequin (11) enveloppant au moins un vilebrequin (9), dans lequel
- l'alimentation en air (2) présente un dispositif de charge (31) et un dispositif d'étranglement (32),
- le dispositif de charge (31) est disposé en amont du dispositif d'étranglement (32),
- le logement de vilebrequin (11) est relié fluidiquement par un dispositif d'évacuation d'air (13) à l'alimentation en air (2),
- une conduite à charge pleine (28) du dispositif d'évacuation d'air (13) présente d'un côté un raccord de conduite à charge pleine (37) et débouche d'un autre côté en amont du dispositif de charge (31) dans l'alimentation en air (2),
- une conduite à charge partielle (29) du dispositif d'évacuation d'air (13) présente d'un côté un raccord de conduite à charge partielle (39) et débouche d'un autre côté en aval du dispositif d'étranglement (32) dans l'alimentation en air (2),
**caractérisé en ce que**
- un dispositif adaptateur (21) est disposé entre la conduite à charge pleine (28) et un chemin à charge pleine (26) du dispositif d'évacuation d'air (13) et relie ceux-ci fluidiquement,
- le dispositif adaptateur (21) est disposé entre la conduite à charge partielle (29) et un chemin à charge partielle (27) du dispositif d'évacuation d'air (13) et relie ceux-ci fluidiquement,
- le dispositif adaptateur (21) présente un premier raccord (33), qui est conçu complémentairement au raccord de conduite à charge pleine (37) et relie ceux-ci fluidiquement,
- le dispositif adaptateur (2) présente un deuxième raccord (34), qui est conçu complémentairement à un raccord de chemin à charge pleine (38) du chemin à charge pleine (26) et peut être couplé à celui-ci,
- le premier raccord (33) et le deuxième raccord (34) sont reliés fluidiquement l'un à l'autre dans le dispositif adaptateur (21),
- le dispositif adaptateur (2) présente un troisième raccord (35), qui est conçu complémentairement au raccord de conduite à charge partielle (39) et est relié à celui-ci,
- le dispositif adaptateur (21) présente un quatrième raccord (36), qui est conçu complémentairement à un raccord de chemin à charge partielle (40) du chemin à charge partielle (27) et peut être couplé à celui-ci,
- le troisième raccord (35) et le quatrième raccord (36) sont reliés fluidiquement l'un à l'autre dans le dispositif adaptateur (21).

2. Moteur à combustion interne selon la revendication 1,
**caractérisé en ce que**
un séparateur de nuage d'huile (16) du dispositif d'évacuation d'air (13) est disposé afin de séparer l'huile et le gaz entre le logement de vilebrequin (11) et le dispositif adaptateur (21) et est notamment coordonné au chemin à charge partielle (27) et au chemin à charge pleine (26).

3. Moteur à combustion interne selon la revendication 2,
**caractérisé en ce que**
le raccord de chemin à charge pleine (38) et le raccord de chemin à charge partielle (40) sont disposés directement sur le séparateur de nuage d'huile (16).

4. Moteur à combustion interne selon les revendications 1 ou 2,
**caractérisé en ce que**
- le chemin à charge pleine (26) présente au moins une soupape, notamment un clapet anti-retour (20), qui est disposé notamment en aval du séparateur de nuage d'huile (16), et
- le chemin à charge partielle (27) présente au moins une soupape, notamment un clapet anti-retour (19), qui est disposé notamment en aval du séparateur de nuage d'huile (16).

5. Moteur à combustion interne selon la revendication 4,
**caractérisé en ce que**
le raccord de chemin à charge pleine (38) et le raccord de chemin à charge partielle (40) sont disposés directement sur les soupapes.

6. Moteur à combustion interne selon les revendications 1 ou 2,
**caractérisé en ce que**
le raccord de chemin à charge pleine (38) et le raccord de chemin à charge partielle (40) sont disposés directement sur un couvercle de culasse (Z) du moteur à combustion interne (1).

7. Moteur à combustion interne selon une des revendications 1 à 6,
**caractérisé en ce que**
le premier (33) et le troisième (35) raccord du dispositif adaptateur (21) sont disposés sur un côté de conduite (41) du dispositif adaptateur (21) et le deuxième (34) et le quatrième (36) raccord sont disposés sur un côté de chemin (42) du dispositif adaptateur, notamment en vis-à-vis.

8. Moteur à combustion interne selon une des revendications 1 à 7,
**caractérisé en ce que**
la conduite à charge pleine (28) est conçue comme un flexible et/ou la conduite à charge partielle (29) est conçue comme un flexible.

9. Moteur à combustion interne selon la revendication 7,
**caractérisé en ce que**
le raccord de conduite à pleine charge (37) et/ou le raccord de conduite à charge partielle (39) est/sont conçus comme partie de ces flexibles, notamment comme une portion d'extrémité des flexibles.

10. Moteur à combustion interne selon les revendications 7 ou 8,
**caractérisé en ce que**
le premier raccord (33) et le troisième raccord (35) du dispositif adaptateur (21) sont conçus notamment en dents de scie et disposés à l'intérieur des flexibles et/ou raccords de conduite (37, 39) correspondants et ainsi reliés à ceux-ci.

11. Moteur à combustion interne selon une des revendications 1 à 9,
**caractérisé en ce que**
- le raccord de chemin à charge pleine (38) est enfiché dans le deuxième raccord (34) du dispositif adaptateur (21) et est ainsi relié, et/ou
- le raccord de chemin à charge partielle (40) est enfiché dans le quatrième raccord (36) du dispositif adaptateur (21) et est ainsi relié.

12. Moteur à combustion interne selon une des revendications 1 à 10,
**caractérisé en ce que**
- le dispositif adaptateur (21), notamment sur le côté de chemin (42) présente un réceptacle (46) et la portion afférente du dispositif d'évacuation d'air (13), notamment la portion de chemin (45), présente une protubérance (45) de forme complémentaire au réceptacle (46), et/ou
- le dispositif adaptateur (21), notamment sur le côté de chemin (42) présente une protubérance (45) et la portion afférente du dispositif d'évacuation d'air (13), notamment la portion de chemin (24) présente un réceptacle (46) de forme complémentaire à la protubérance (46).

13. Moteur à combustion interne selon une des revendications 1 à 11,
**caractérisé en ce que**
le dispositif d'évacuation d'air (13) présente une soupape de régulation de pression (18), qui est disposée entre le logement de vilebrequin (11) et le dispositif adaptateur (21) et est coordonnée notamment au chemin à charge partielle (27) et au chemin à charge pleine (26).

14. Moteur à combustion interne selon une des revendications 2 à 12,
**caractérisé en ce que**
le moteur à combustion interne (1) présente une conduite d'huile (17) pour refouler l'huile du séparateur de nuage d'huile (16) au logement de vilebrequin (11).

15. Dispositif adaptateur (21) pour moteur à combustion interne (1) selon une des revendications 1 à 14.
